Europäisches Patentamt

European Patent Office

Office européen des brevets

(11) Veröffentlichungsnummer: **0 588 151 A1**

## (12) EUROPÄISCHE PATENTANMELDUNG

(21) Anmeldenummer: **93113964.6**

(22) Anmeldetag: **31.08.93**

(51) Int. Cl.5: **H04B 10/14**

(30) Priorität: **14.09.92 DE 4230734**

(43) Veröffentlichungstag der Anmeldung:
**23.03.94 Patentblatt 94/12**

(84) Benannte Vertragsstaaten:
**DE FR GB NL**

(71) Anmelder: **Siemens Aktiengesellschaft**
**Wittelsbacherplatz 2**
**D-80333 München(DE)**

(72) Erfinder: **Noé, Reinhold Dr.**
**Helmerner Weg 2**
**D-33100 Paderborn(DE)**

(54) **Optischer Heterodynempfänger zum Empfang eines durch differentielle Umtastung der Phase eines Trägerfrequenzsignals erzeugten binär kodierten optischen Signals.**

(57) Bei einem optischen DPSK-Heterodynempfänger, bei dem eine Lokaloszillatorfrequenz mit Hilfe eines eine verdoppelte Zwischenfrequenz erzeugenden Diskriminators auf einen Sollwert geregelt wird, soll durch Wahl eines geeigneten Diskriminators für die verdoppelte Zwischenfrequenz sichergestellt werden, daß, wenn der Modulationsphasenhub $\Delta\Phi$ vom Idealwert $\pm\pi$, bei dem optimale Empfängerempfindlichkeit erreicht wird, abweicht, eine geringere Empfängerempfindlichkeitseinbuße als bisher auftritt. Dazu wird die Zwischenfrequenz auf den Wert $\omega_{ZFr}-(\Delta\Phi\pm\pi)/(2T)$ geregelt, wobei $\omega_{ZFr}$ der Wert der Zwischenfrequenz ist, den diese im Idealfall, daß der Phasenhub $\Delta\Phi = \pm\pi$ beträgt, zum Erzielen einer optimalen Empfängerempfindlichkeit einnimmt, und wobei T die Dauer eines Bits des dem Empfänger zugeführten optischen Signals ist.

EP 0 588 151 A1

EP 0 588 151 A1

Die Erfindung betrifft einen optischen Heterodynempfänger zum Empfang eines durch differentielle Umtastung der Phase eines Trägerfrequenzsignals erzeugten binär kodierten optischen Signals nach dem Oberbegriff des Anspruchs 1.

Bei der binären differentiellen Phasenumtastung (DPSK) wird die Phase eines optischen Trägerfrequenzsignals binär kodiert. Die optische Phase $\Phi(t)$ wird beim Übergang auf das nächste Bit nicht geändert, wenn einer der beiden Binärwerte, beispielsweise eine logische "1" übertragen werden soll. Sie wird aber um $r \cdot \pi$, wobei r prinzipiell eine beliebige ungerade, positive oder negative Zahl sein kann, umgetastet, wenn der andere Binärwert, im Beispielsfall die logische "0", übertragen werden soll. Technisch sinnvolle Werte für r sind r = 1 und r = -1.

In optischen Heterodynsystemen ist es erwünscht, den Einfügeverlust eines externen Phasemodulators im optischen Sender, üblicherweise einem Halbleiterlasersender, dadurch zu umgehen, daß der Lasersender direkt durch Stromimpulse moduliert wird (siehe T. Naito et al, "4 Gbit/s, 233-km optical fiber transmission experiment using newly proposed direct-modulation PSK" Electronics Lett. 26 (1990) No. 20, S. 1734-1736 ).Die optische Sendefrequenz ist innerhalb gewisser Grenzen eine lineare Funktion des Laserstroms durch den Halbleiterlaser. Soll die Phase geändert werden, so wird ein mehr oder weniger kurzer Stromimpuls erzeugt.

Die Sendefrequenz ändert sich kurzzeitig, so daß ein Phasenhub $\Delta\Phi$ zustandekommt, der sich aus dem Integral der Änderung der Kreisfrequenz $\omega$ über der Zeit errechnet. Frequenz bedeutet im folgenden stets Kreisfrequenz.

Je nach dem gesendeten Symbol gilt demnach

$$\Phi(t) - \Phi(t-T) = 0 \qquad (1a)$$

$$\Phi(t) - \Phi(T-T) = \Delta\Phi \qquad (1b)$$

wobei t die Zeit und T die Dauer eines Bits des optischen Sendersignals bedeuten. In der Praxis ist es möglich und aus gewissen Gründen auch sehr nützlich, Phasensprünge gemäß Gleichung (1b) abwechselnd nach oben oder unten auszuführen. Für die vorliegende Erfindung ist Voraussetzung, daß alle Impulse und auch alle Phasensprünge jeweils die gleiche Polarität aufweisen, d.h. daß unipolare Modulation vorliegt.

In der Praxis ist es nicht leicht, etwa bei Anwesenheit von Reflexionen zum optischen Sender, den gewünschten Phasenhub $\Delta\Phi = r \cdot \pi$ mit r = 1 oder r = -1, wobei wegen der gleichen Polarität aller Phasensprünge für ein Ausführungsbeispiel eines Empfängers entweder r = 1 oder r = -1 gilt, einzustellen und auf Dauer stabil zu halten. Dadurch ergibt sich eine Empfindlichkeitseinbuße des Empfängers.

Der Erfindung liegt die Aufgabe zugrunde, einen optischen Heterodynempfänger der eingangs genannten Art, bei dem die genannte Empfindlichkeitseinbuße auftritt, dahingehend zu verbessern, daß bei einer Abweichung des phasenhubs $\Delta\Phi$ von $r \cdot \pi$ eine geringere als die genannte Empfindlichkeitseinbuße auftritt.

Diese Aufgabe wird durch die im kennzeichnenden Teil des Anspruchs 1 angegebenen Merkmale gelöst.

Bevorzugte und vorteilhafte Ausgestaltungen der Erfindung gehen aus den Unteransprüchen hervor.

Die Erfindung wird anhand der Figuren in der nachfolgenden Beschreibung beispielhaft näher erläutert. Es zeigen:

Figur 1      ein Blockschaltbild eines auf einem herkömmlichen Heterodynempfängers basierenden erfindungsgemäßen Empfängers,

Figur 2      in als Funktion der Zeit t eine Modulationsspannung in Form eines Pulssignals, mit welcher der optische Sender des Empfängers nach Figur 1 zur Erzeugung des phasenumgetasteten optischen Signals betrieben wird,

Figur 3      eine Ausführungsform eines Diskriminators, der vorzugsweise als Demodulatoreinrichtung oder als Diskriminator der Regeleinrichtung des Empfängers nach Figur 1 verwendbar ist,

Figur 4      die Ausgangsspannung der Demodulatoreinrichtung bzw. des Frequenzdiskriminators als Funktion eines bestimmten Phasenwinkels,

Figuren 5a und 5b      jeweils die Ausgangsspannung der Demodulatoreinrichtung als Funktion des bestimmten Phasenwinkels mit zur Erklärung dienenden Größen, und

Figur 6      die Empfängerempfindlichkeitseinbuße in dB als Funktion der betragsmäßigen Abweichung des Modulationshubes $\Delta\Phi$ vom Optimum im Fall des Standes der Technik und im Fall der Erfindung.

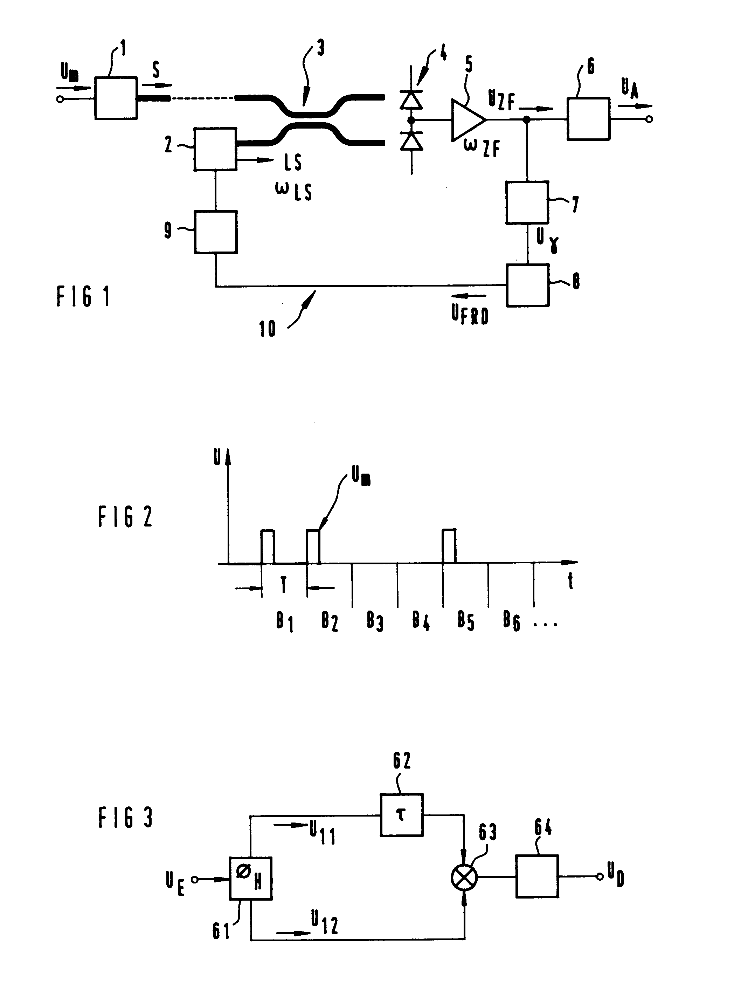

Bei dem Empfänger nach Figur 1 wird der optische Sender 1 in Form eines Sendelasers mit einer Modulationsspannung in Form einer Pulsfolge gespeist und erzeugt in Abhängigkeit von dieser Pulsfolge

2

das optische Signal S.

Die Modulationsspannung $U_m$ bildet eine zeitliche Folge von Bits $B_1$, $B_2$, $B_3$, ... bestimmter Dauer T, wobei jedes dieser Bits entweder einen Impuls der Pulsfolge enthält oder nicht. In der Figur 2 ist ein Beispiel einer solchen die Modulationsspannung $U_m$ darstellenden Pulsfolge auf der Zeitachse t für die ersten sechs Bits $B_1$ bis $B_6$ einer Bitfolge dargestellt, wobei z.B. die ersten beiden Bits $B_1$ und $B_2$ und das fünfte Bit $B_5$ jeweils einen Impuls der Pulsfolge enthalten, während die übrigen Bits $B_3$, $B_4$ und $B_6$ keinen solchen Impuls enthalten.

Das optische Signal S ist ebenfalls in der Form der Folge von Bits $B_1$, $B_2$, $B_3$ ... der bestimmten Dauer T und durch eine bitweise binäre differentielle Umtastung der Phase $\Phi$ eines optischen Trägerfrequenzsignals um einen bestimmten Phasenhub $\Delta\Phi$ erzeugt.

Das optische Signal S wird über eine optische Übertragungsleitung (in der Figur 1 sind optische Leitungen im Gegensatz zu elektrischen Leitungen fett dargestellt) einem optischen Koppler 3, beispielsweise einem Richtkoppler zugeführt, in welchem das optische Signal S mit einem von einem Lokaloszillator 2 erzeugten Lokaloszillatorsignal LS überlagert wird.

Aus dem mit dem optischen Lokaloszillatorsignal LS überlagerten optischen Signal S wird in bekannter Weise durch Detektion in einem optischen Detektor 4 und Verstärkung in einem elektrischen Verstärker 5 ein elektrisches Zwischenfrequenzsignal $U_{ZF}$ erzeugt, das, wie das optische Signal S, ebenfalls differentielle Phasenumtastung aufweist.

Das Zwischenfrequenzsignal $U_{ZF}$ wird in einer Demodulatoreinrichtung 6 demoduliert, wonach an einem Ausgang 60 der Demodulatoreinrichtung 6 ein Ausgangssignal $U_A$ des Empfängers erzeugt wird.

Der Empfänger nach Figur 1 weist überdies eine Regeleinrichtung 10 zum Regeln der Zwischenfrequenz $\omega_{ZF}$ des Zwischenfrequenzsignals $U_{ZF}$ auf einen bestimmten Wert auf.

Diese Regeleinrichtung 10 umfaßt einen Frequenzverdoppler 7 zum Verdoppeln der Zwischenfrequenz $\omega_{ZF}$ des Zwischenfrequenzsignals $U_{ZF}$, einen Frequenzdiskriminator 8 zum Diskriminieren des frequenzverdoppelten Zwischenfrequenzsignals $U_V$ und Erzeugen eines einen Istwert der verdoppelten Zwischenfrequenz $2\omega_{ZF}$ des frequenzverdoppelten Zwischenfrequenzsignals $U_{\omega ZF}$ anzeigenden Ausgangssignals $U_{FRD}$ und einen Regler 9, über den bei Abweichungen des Istwertes von einem bestimmten Sollwert $2\omega_{ZFr}$ eine Frequenz $\omega_{LS}$ des frequenzmäßig steuerbaren Lokaloszillators 2 derart änderbar ist, daß die verdoppelte Zwischenfrequenz $2\omega_{ZF}$ des frequenzverdoppelten Zwischenfrequenzsignals $U_V$ diesen Sollwert $2\omega_{ZFr}$ einnimmt.

Eine mögliche Ausführungsform der Demodulatoreinrichtung 6 besteht in einem Diskriminator, wie er generell in Figur 3 in einem Blockschaltbild schematisch dargestellt ist. Dieser Diskriminator gemäß Figur 3 weist auf:

Eine Einrichtung 61 zum Erzeugen zweier, einen bestimmten Phasenunterschied $\Phi_H$ relativ zueinander aufweisender Signalanteile $U_{11}$ und $U_{12}$ aus einem Eingangssignal $U_E$, ein Verzögerungsglied 62 zum Verzögern dieser den relativen Phasenunterschied $\Phi_H$ aufweisenden beiden Signalanteile $U_{11}$ und $U_{12}$ um eine bestimmte Dauer $\tau$ relativ zueinander, und einen Multiplizierer 63 zum Multiplizieren der beiden um $\tau$ relativ zueinander verzögerten Signalanteile $U_{11}$ und $U_{12}$ zur Erzeugung eines Ausgangssignals $U_D$ des Diskriminators.

Wird für das Eingangssignal $U_E$ beispeilsweise eine Cosinusfunktion $\cos(\omega t + \Phi(t))$ vorausgesetzt, so kann bei dem Diskriminator nach Figur 3 unter Vernachlässigung von Proportionalitätskonstanten angenommen werden, daß $U_{12} = \cos(\omega \cdot t + \Phi(t))$ und $U_{11} = \cos(\omega(t-\tau) + \Phi(t-\tau)-\Phi_H)$ betragen und in dem Multiplizierer 63 miteinander multipliziert werden.

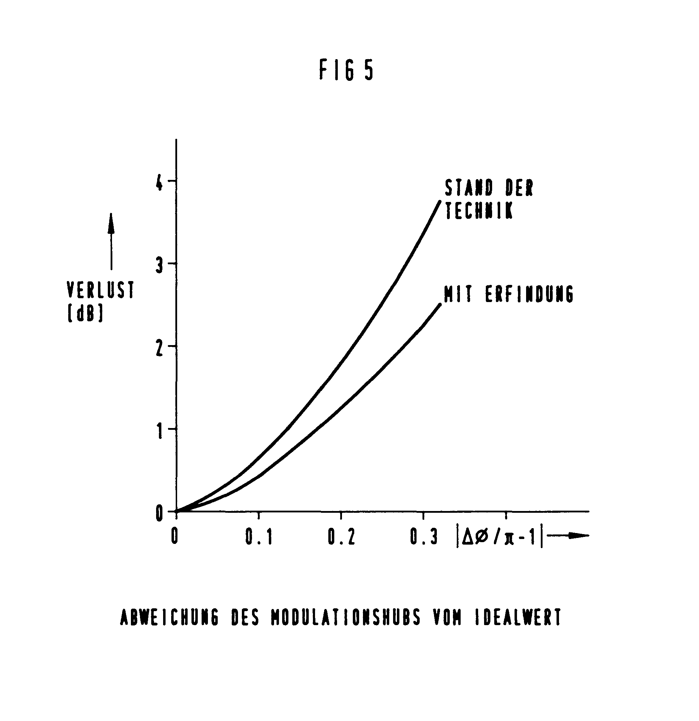

Besteht die Einrichtung 61 aus einem $0°$-Hybrid, gilt $\Phi_H = 0°$ (diese Ausführung wird in T. Naito et al, "4 Gbit/s, 233-km optical fiber transmission experiment using newly proposed direct-modulation PSK" Electronics Lett. 26 (1990) No. 20, S. 1734-1736 verwendet). Ist die Einrichtung 61 ein $180°$-Hybrid, das beispielsweise mittels eines Transformators oder invertierenden Verstärkers herstellbar ist, gilt $\Phi_H = \pi = 180°$. Ist die Einrichtung 61 ein $90°$-Hybrid gilt $\Phi_H = \pm \pi/2 = \pm 90°$ (ein Diskriminator mit einem $90°$-Hybrid als Leistungsteiler ist beispielsweise in Figur 5 von R. Noé et al "Comparison of Polarization Handling Methods in Coherent Optical Systems", J. Lightwave Technology, 9 (1991) 10, S. 1353-1366 beschrieben). Es ist technisch möglich, aber unattraktiv, näherungsweise auch andere Hybridwinkel zu realisieren.

Das Ausgangssignal $U_D$ des Diskriminators nach Figur 3 beträgt nach Ausfiltern des Signalanteils bei der doppelten Frequenz durch ein Tiefpaßfilter 64 unter Vernachlässigung von Proportionalitätskonstanten gleich

$$U_D = \cos(\omega\tau + \Phi(t)-\Phi(t-T) + \Phi_H) \qquad (2).$$

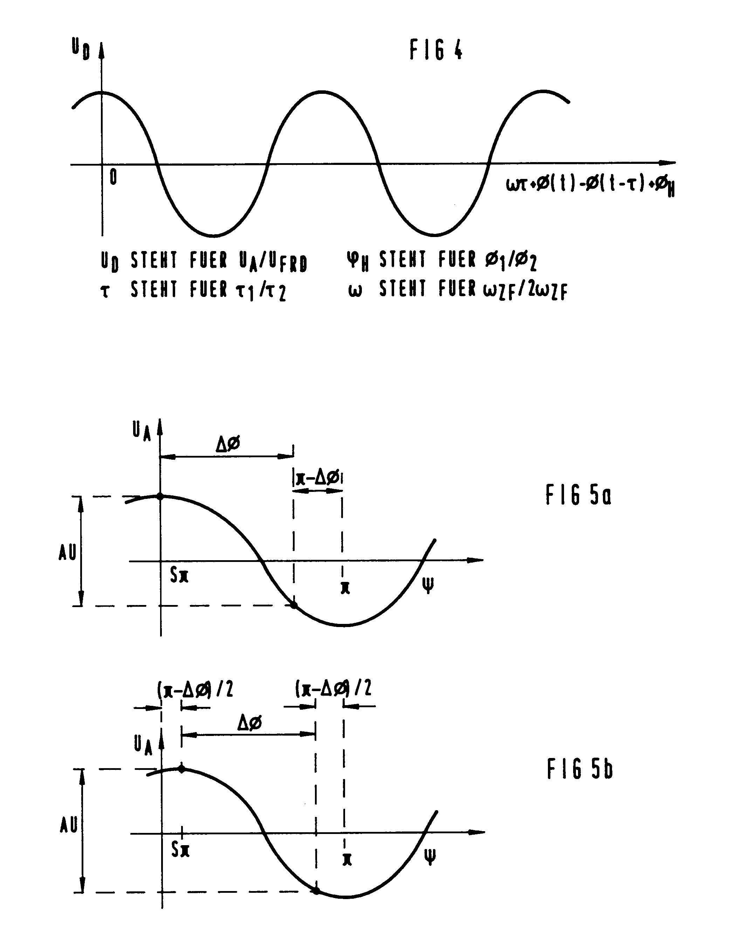

In der Figur 4 ist diese Cosinusfunktion $U_D$ als Funktion des Arguments $\omega\tau + \Phi(t)-\Phi(t-\tau) + \Phi_H$ dargestellt. Bei fester Frequenz wirkt der Diskriminator nach Figur 3 beispielsweise als Phasendiskriminator zwischen der aktuellen und der früheren Phase. Im Falle konstanter Phasen wirkt dieser Diskriminator als Frequenzdiskriminator.

Bei Verwendung des Diskriminators nach Figur 3 als Demodulatoreinrichtung 6 des Empfängers nach Figur 1 ist als Eingangssignal $U_E$ das Zwischenfrequenzsignal $U_{ZF}$, $\Phi_H$ gleich $\Phi_1$ und $\tau$ gleich der Dauer T eines Bits $B_1$, $B_2$, $B_3$, ...zu wählen. $U_D$ wird zum Ausgangssignal $U_A$ des Empfängers nach Figur 1, für das nach Formel (2)

$$U_A = \cos(\omega_{ZF}\bullet T + \Phi(t)-\Phi(t-T) + \Phi_1) \qquad (3)$$

gilt. Zur Demodulation wird außerdem eine reguläre Zwischenfrequenz $\omega_{ZFr}$ und der Typ des Hybrids 61 so gewählt, daß

$$\omega_{ZFr} + \Phi_1 = k_1 \bullet \pi \qquad (4)$$

ist, wobei $k_1$ eine ganze Zahl sei. $\omega_{ZFr}$ ist eine Konstante, die übrigen Größen der Gleichung (4) in einem realisierten Empfänger ebenfalls Konstanten sind. In Abweichung davon bezeichnet $\omega_{ZF}$ die tatsächliche, gegebenenfalls von $\omega_{ZFr}$ abweichende Zwischenfrequenz des Zwischenfrequensignals $U_{ZF}$.

Es ist bekannt, die Zwischenfrequenz $\omega_{ZF}$ auf ihren regulären Wert $\omega_{ZFr}$ einzuregeln. Wird außerdem $k_1$ beispielsweise geradzahlig gewählt, so gilt $U_A = \cos(\Phi(t)-\Phi(t-T))$. Bei Bitwechsel ohne Phasensprung nach Formel (1a) gilt $U_A(0) = 1$. Bei Übertragung eines Phasensprungs nach Formel (1b) gilt $U_A(\Delta\Phi) = \cos(\Delta\Phi)$. (Die Augenöffnung AU (siehe Figur 5a) des Ausgangssignals $U_A$ ist

$$AU = |U_A(0)-U_A(\Delta\Phi)| = 1-\cos((\Delta\Phi) = 2\sin^2((\Delta\Phi/2) \qquad (5).$$

Beträgt $\Delta\Phi = r\bullet\pi$, was den Idealfall darstellt, so wird die optimale Augenöffnung AU = 2 erreicht. Bei Abweichung des Phasenhubs $\Delta\Phi$ vom Idealwert $r\bullet\pi$ ergibt sich eine geringere Augenöffnung, was zu einer Empfindlichkeitseinbuße im Empfänger führt.

Bei der bekannten Zwischenfrequenzregelung wird das Zwischenfrequenzsignal $U_{ZF}$ einem Frequenzverdoppler 7 zugeführt, der beispielsweise als Quadrierer ausgeführt wird. Ist $U_{ZF} = \cos(\omega_{ZF}\bullet t + \Phi(t))$, so ist das Ausgangssignal $U_V$ dieses Quadrierers gleich $U_V = \cos^2(\omega_{ZF}\bullet t + \Phi(t)) = 1/2 + (1/2)\bullet\cos(2\omega_{ZF}\bullet t + 2\Phi(t))$. Der den Gleichanteil 1/2 angebende erste Term auf der rechten Seite dieser Gleichung wird ausgefiltert. Der zweite Term enthält im Idealfall ein Signal mit konstanter Phase, da sich $\Phi(t)$ im Idealfall lediglich um 0 oder $r\bullet\pi$ ändert, so daß sich zwei $2\Phi(t)$ um 0 oder $2r\bullet\pi$ ändert. Die verdoppelte Zwischenfrequenz $2\omega_{ZF}$ wird in einem Frequenzdiskriminator 8 diskriminiert, der wiederum als Diskriminator nach Figur 3 ausgeführt sein kann. Eine Nullstelle des Ausgangssignals $U_{FRD}$ dieses Diskriminators 8 soll jetzt bei der verdoppelten regulären Zwischenfrequenz $2\omega_{ZFr}$, die den bestimmten Sollwert bildet, liegen. Abweichungen von diesem Sollwert werden über einen Regler 9, beispielsweise ein PID-Regler, der gegebenenfalls ein weiteres Tiefpaßfilter enthält, dem Lokaloszillator 2 zugeführt. Der Regler 9 ändert die Frequenz $\omega_{LS}$ des Lokaloszillatorsignals LS des Lokaloszillators 2 so, daß die verdoppelte Zwischenfrequenz auf den Wert $2\omega_{ZFr}$ eingeregelt wird, so daß, wie gewünscht, $\omega_{ZF} = \omega_{ZFr}$ gilt.

Mit der Erfindung wird durch Wahl eines geeigneten Diskriminators (8) für die verdoppelte Zwischenfrequenz $2\omega_{ZF}$ sichergestellt, daß bei einer Abweichung des Phasenhubs $\Delta\Phi$ von $r\bullet\pi$ im Empfänger eine geringere als die oben erwähnte Empfindlichkeitseinbuße auftritt.

Dazu wird der Diskriminator 8 erfindungsgemäß in Form eines Diskriminators nach Figur 3 ausgeführt, wobei

$$\tau = T \text{ und } \Phi_H = 2\Phi_1 \pm \pi/2 \qquad (6)$$

gewählt wird.

Ohne Beschränkung der Allgemeinheit wird für die folgenden Erläuterungen $\Phi_H = 2\Phi_1 - \pi/2$ gewählt. Als Eingangssignal $U_E$ ist beim Diskriminator nach Figur 3 jetzt das frequenzverdoppelte Zwischenfrequenzsignal $U_V$ zu wählen. Das Ausgangssignal $U_D$ ist gleich dem Ausgangssignal $U_{FRD}$. Für dieses gilt nach der Gleichung (2) unter der Berücksichtigung, daß wegen der Frequenzverdoppelung $\omega = 2\omega_{ZF}$ und $2\Phi$ anstelle von $\Phi$ zu setzen ist

$$U_{FRD} = \cos(2\omega_{ZF}\cdot T + 2\Phi(t) - 2\Phi(t-T) + 2\Phi_1 - \pi/2)$$
$$= \cos(2(\omega_{ZF}\cdot T + \Phi(t) - \Phi(t-T) + \Phi_1) - \pi/2)$$
$$= \cos(2(\omega_{ZF}\cdot T + \Phi(t) - \Phi(t-T) + k_1\pi - \omega_{ZFr}\cdot T) - \pi/2)$$

$$= \cos(2((\omega_{ZF} - \omega_{ZFr})T + \Phi(t) - \Phi(t-T)) - \pi/2)$$
$$= \sin(2((\omega_{ZF} - \omega_{ZFr})T + \Phi(t) - \Phi(t-T))) \qquad (7).$$

Falls kein Phasensprung gemäß Gleichung (1a) stattfindet, so gilt $U_{FRD}(0) = \sin(2(\omega_{ZF}-\omega_{ZFr})T)$. Falls ein Phasensprung gemäß Gleichung (1b) stattfindet, so gilt

$$U_{FRD}(\Delta\Phi) = \sin(2((\omega_{ZF}-\omega_{ZFr})T + \Delta\Phi)).$$

Durch den Regler 9 wird der zeitliche Mittelwert $\langle U_{FRD}\rangle$ von $U_{FRD}$ zu null gemacht. Unter der Annahme, daß ein Phasensprung mit der Wahrscheinlichkeit 1/2 stattfindet, gilt

$$0 = \langle U_{FRD}\rangle = 1/2(U_{FRD}(0) + U_{FRD}(\Delta\Phi)) =$$
$$= (1/2)\cdot(\sin(2\omega_{ZF}-\omega_{ZFr})\cdot T) + (\sin(2((\omega_{ZF}-\omega_{ZFr})T + \Delta\Phi))).$$

Daraus folgt, daß
$\sin(-2(\omega_{ZF}-\omega_{ZFr})T) = \sin(2((\omega_{ZF}-\omega_{ZFr})T + \Delta\Phi))$ und schließlich $\omega_{ZF} = \omega_{ZFr} - (\Delta\Phi - q\cdot\pi)/(2T)$ gilt, wobei q eine ganze Zahl ist. Da im Idealfall $\Delta\Phi = r\cdot\pi$ die Zwischenfrequenz $\omega_{ZF}$ gleich der regularen Zwischenfrequenz $\omega_{ZFr}$ sein soll, gilt q = r und somit allgemein

$$\omega_{ZF} = \omega_{ZFr} - (\Delta\Phi - r\pi)/(2T) \qquad (8).$$

Die Zwischenfrequenz $\omega_{ZF}$ wird demnach bei einer Abweichung des Phasenhubs $\Delta\Phi$ vom Idealwert $r\cdot\pi$ auf einen von $\omega_{ZFr}$ abweichenden Wert eingeregelt. Die Ausgangsspannung $U_A$ des Empfängers wird durch Einsetzen von (8) und (4) mit geradem $k_1$ in (3)

$$U_A = \cos((\omega_{ZFr} - (\Delta\Phi - r\pi)/(2T))T + \Phi(t) - \Phi(t-T) + k_1\pi - \omega_{ZFr}\cdot T)$$
$$= \cos(-(\Delta\Phi - r\pi)/2 + \Phi(t) - \Phi(t-T))$$
$$= -r\cdot\sin(-\Delta\Phi/2 + \Phi(t) - \Phi(t-T)) \qquad (9)$$

erhalten.

Ohne Phasensprung nach Gleichung (1a) ergibt sich aus Gleichung (9) für die Ausgangsspannung $U_A$ der Wert $U_A(0) = r\cdot\sin(\Delta\Phi/2) = \sin(|\Delta\Phi|/2)$, während mit Phasensprung nach Gleichung (1b) der Wert $U_A(\Delta\Phi) = -r\cdot\sin(\Delta\Phi/2) = \sin(|\Delta\Phi|/2)$ erhalten wird. Die Augenöffnung AU (siehe Figur 5b) beträgt analog zu Formel (5)

$$AU = |U_A(0) - U_A(\Delta\Phi)| = \sin(|\Delta\Phi|/2) \qquad (10).$$

Die Augenöffnung nach Formel (10) ist größer als die Augenöffnung nach Formel (5), so daß die durch eine Abweichung des Phasenhubs $\Delta\Phi$ vom Idealwert $r\pi$ verursachte Empfindlichkeitseinbuße teilweise ausgeglichen wird.

Zur Verdeutlichung des Prinzips zeigen die Figuren 5a und 5b die Ausgangsspannung $U_A$ des Heterodynempfängers nach Figur 1 als Funktion des Phasenwinkels $\Psi = \omega_{ZF}.T + \Phi(t)-\Phi(t-T) + \Phi_1$ ($\Psi$ ist das Argument der Cosinusfunktion nach Formel (2)) bei einem vom Idealwert $r\pi$ abweichenden Phasenhub $\Delta\Phi$, wobei $r = 1$ gewählt ist. $s\pi$ bezeichnet allgemein ein ganzzahliges, in den Figuren 5a und 5b geradzahliges Vielfaches von $\pi$. In Figur 5a ergibt sich gemäß dem Stand der Technik eine relativ kleine Augenöffnung AU, während sie in Figur 5b erfindungsgemäß dem maximal erreichbaren Wert näherkommt.

Eine andere Darstellung der erfindungsgemäß erzielten Verbesserung ergibt sich aus Figur 6. Sie zeigt näherungsweise die Empfängerempfindlichkeitseinbuße in dB als Funktion der betragsmäßigen Abweichung des auf den Wert $\pi$ normalisierten Modulationshubes $\Delta\Phi$ vom Optimum.

Im allgemeinen wird als Hybrid 61 der in Form des Diskriminators nach Figur 3 ausgebildeten Demodulatoreinrichtung ein $0°$-, $90°$- oder $180°$-Hybrid verwendet, so daß nach Formel (4) der Term $\omega_{ZFr}\cdot T$ ein ganzzahliges Vielfaches von $\pi/2$ ist. Aus Formel (6) folgt damit, daß die vom Hybrid 61 des in Form des Diskriminators nach Figur 3 ausgebildeten Diskriminators 8 in Figur 1 erzeugte Phasenverschiebung $\Phi_H$ gleich $\Phi_H = \pm \pi/2$ ist. Dies ist der wichtigste Spezialfall. Durch Kombination der Formel (6) mit der Formel (4) wird

$$\Phi_H = 2\omega_{ZFr}\cdot T + \pi(m + 1/2) \qquad (11)$$

mit ganzzahligem m erhalten. Entsprechend ist das Hybrid 61 des in Form eines Diskriminators nach Figur 3 ausgebildeten Diskriminators 8 nach Figur 1 zu dimensionieren. Auf diese Weise läßt sich der Diskriminator 8 dimensionieren, ohne daß man bei der Wahl der Demodulatoreinrichtung 6 nach Figur 1 festgelegt ist, die nicht notwendig wie ein Diskriminator nach Figur 3 ausgebildet sein muß.

**Patentansprüche**

1. Optischer Heterodynempfänger zum Empfang eines durch bitweise binäre differentielle Umtastung der Phase ($\Phi$) eines optischen Trägerfrequenzsignals um einen bestimmten Phasenhub ($\Delta\Phi$) erzeugten binär kodierten optischen Signals (S) in Form einer Folge von Bits ($B_1$, $B_2$, $B_3$ ...) bestimmter Dauer (T), wobei der Phasenhub ($\Delta\Phi$) in einem zum Erreichen einer optimalen Empfängerempfindlichkeit angestreben, aber nicht notwendigerweise exakt eingehaltenen Idealfall einen Wert $\Delta\Phi = r\bullet\pi$ mit ganzzahligem r, insbesondere $r = 1$ oder
   $r = -1$ hat, mit
   - einer Einrichtung (3, 4, 5) zur Überlagerung des optischen Signals (S) mit einem optischen Lokaloszillatorsignal (LS) eines Lokaloszillators (2) und Erzeugen eines elektrischen Zwischenfrequenzsignals ($U_{ZF}$) aus den einander überlagerten optischen Signalen (S, LS),
   - einer Demodulatoreinrichtung (6) zum Demodulieren des Zwischenfrequenzsignals ($U_{ZF}$) und Erzeugen eines Ausgangssignals ($U_A$) des Empfängers, und
   - einer Regeleinrichtung (10) zum Regeln einer Zwischenfrequenz ($\omega_{ZF}$) des Zwischenfrequenzsignals ($U_{ZF}$) auf einen bestimmten Wert, die
     - einen Frequenzverdoppler (7) zum Verdoppeln der Zwischenfrequenz ($\omega_{ZF}$) des Zwischenfrequenzsignals ($U_{ZF}$),
     - einen Frequenzdiskriminator (8) zum Diskriminieren des frequenzverdoppelten Zwischenfrequenzsignals ($U_V$) und Erzeugen eines einen Istwert der verdoppelten Zwischenfrequenz ($2\omega_{ZF}$) des frequenzverdoppelten Zwischensignals ($U_V$) anzeigenden Ausgangssignals ($U_{FRD}$) und
     - einen Regler (9) aufweist, über den bei Abweichungen des Istwertes von einem bestimmten Sollwert ($2\omega_{ZFr}$) eine Frequenz ($\omega_{LS}$) des Lokaloszillatorsignals (LS) des frequenzmäßig steuerbaren Lokaloszillators (2) derart änderbar ist, daß die verdoppelte Zwischenfrequenz ($2\omega_{ZF}$) des frequenzverdoppelten Zwischenfrequenzsignals ($U_V$) diesen Sollwert ($2\omega_{ZFr}$) einnimmt,
   **dadurch gekennzeichnet,**
   - daß die Regeleinrichtung (10) die Zwischenfrequenz ($\omega_{ZF}$) auf den Wert

     $$\omega_{ZF} = \omega_{ZFr} - (\Delta\Phi - r\bullet\pi)/(2T)$$

     regelt, wobei $\omega_{ZFr}$ ein Wert der Zwischenfrequenz ($\omega_{ZF}$) ist, den diese Zwischenfrequenz ($\omega_{ZF}$) im Idealfall, daß der Phasenhub $\Delta\Phi = r\bullet\pi$ beträgt, zum Erzielen einer optimalen Empfängerempfindlichkeit einnimmt, wobei der bestimmte Sollwert ($2\omega_{ZFr}$) gleich dem Doppelten dieses Wertes $\omega_{ZF}$ ist, und wobei T die Dauer eines Bits ($B_1$, $B_2$, $B_3$ ...) des optischen Signals (S) ist.

2. Empfänger nach Anspruch 1,
   **dadurch gekennzeichnet,**
   daß der Frequenzdiskriminator (8)
   - eine Einrichtung (61) zum Erzeugen zweier, einen bestimmten Phasenunterschied ($\Phi_H$) relativ zueinander aufweisender frequenzverdoppelter Zwischenfrequenzanteile ($U_{21}$, $U_{22}$) aus dem frequenzverdoppelten Zwischenfrequenzsignal ($U_V$),
   - ein Verzögerungsglied (62) zum Verzögern der den relativen Phasenunterschied ($\Phi_H$) aufweisenden beiden frequenzverdoppelten Zwischenfrequenzsignalanteile ($U_{21}$, $U_{22}$) um die Dauer (T) eines Bits ($B_1$, $B_2$, $B_3$ ...) des optischen Signals (S) relativ zueinander und
   - einen Multiplizierer (63) zum Multiplizieren der beiden relativ zueinander verzögerten Frequenzverdoppelten Zwischenfrequenzsignalanteile ($U_{21}$, $U_{22}$) miteinander zur Erzeugung des Ausgangssignals ($U_V$) des Frequenzdiskriminators (8) aufweist, und daß die Einrichtung (61) zum Erzeugen der den relativen Phasenunteschied ($\Phi_H$) aufweisenden beiden frequenzverdoppelten Zwischenfrequenzanteile ($U_{21}$, $U_{22}$) des Frequenzdiskriminators (8) derart ausgebildet ist, daß der von dieser Einrichtung (61) erzeugte Phasenunterschied ($\Phi_H$) gleich $-2\omega_{ZFr}.T + \pi(m+1/2)$ mit beliebigem ganzzahligem m ist.

3. Empfänger nach Anspruch 2,
   **dadurch gekennzeichnet,**
   daß die Demodulatoreinrichtung (6) derart ausgebildet ist, daß $\omega_{ZFr} \cdot T$ ein ganzzahliges Vielfaches von $\pi/2$ ist, und daß die Einrichtung (61) des Frequenzdiskriminators (8) zur Erzeugung der den relativen Phasenunterschied ($\Phi_H$) aufweisenden beiden frequenzverdoppelten Zwischenfrequenzsignalanteile ($U_{21}$, $U_{22}$) des Frequenzdiskriminators (8) einen Phasenunterschied ($\Phi_H$) von 90° erzeugt.

4. Empfänger nach Anspruch 3,
   **dadurch gekennzeichnet,**
   daß die Demodulatoreinrichtunng (6)
   - eine Einrichtung (61) zum Erzeugen zweier, einen bestimmten Phasenunterschied ($\Phi_1$) relativ zueinander aufweisender Zwischenfrequenzanteile ($U_{11}$, $U_{12}$) aus dem Zwischenfrequenzsignal ($U_{ZF}$),
   - ein Verzögerungsglied (62) zum Verzögern der den relativen Phasenunterschied ($\Phi_1$) aufweisenden beiden Zwischenfrequenzsignalanteile($U_{11}$, $U_{12}$) um die Dauer (T) eines Bits ($B_1$, $B_2$, $B_3$,...) des optischen Signals (S) relativ zueinander und
   - einen Multiplizierer (63) zum Multiplizieren der beiden relativ zueinander verzögerten Zwischenfrequenzsignalanteile ($U_{11}$, $U_{12}$) zur Erzeugung des Ausgangssignals ($U_A$) des Empfängers aufweist, und
   daß die Einrichtung (61) zur Erzeugung der den relativen Phasenunterschied ($\Phi_1$) aufweisenden beiden Zwischenfrequenzsignalanteile($U_{11}$, $U_{12}$) der Demodulatoreinrichtung (6) einen Phasenunterschied ($\Phi_1$) von entweder 0° oder 180° erzeugt, so daß $\omega_{ZFr} \cdot T = n\pi$ mit beliebigem ganzzahligen n beträgt.

5. Empfänger nach Anspruch 3,
   **dadurch gekennzeichnet,**
   daß die Demodulatoreinrichtung (6)
   - eine Einrichtung (61) zum Erzeugen zweier, einen bestimmten Phasenunterschied ($\Phi_1$) relativ zueinander aufweisender Zwischenfrequenzanteile ($U_{11}$, $U_{12}$) aus dem Zwischenfrequenzsignal ($U_{ZF}$),
   - ein Verzögerungsglied (62) zum Verzögern der den relativen Phasenunterschied ($\Phi_1$) aufweisenden beiden Zwischenfrequenzsignalanteile($U_{11}$, $U_{21}$) um die Dauer (T) eines Bits (B1, B2, B3, ...) relativ zueinander und
   - einen Multiplizierer (63) zum Multiplizieren der beiden relativ zueinander verzögerten Zwischenfrequenzsignalanteile ($U_{11}$, $U_{12}$) zur Erzeugung des Ausgangssignals ($U_A$) des Empfängers aufweist, und
   daß die Einrichtung (61) der Demodulatoreinrichtung (6) zur Erzeugung der den relativen Phasenunterschied ($\Phi_1$) aufweisenden beiden Zwischenfrequenzsignalanteile ($U_{11}$, $U_{12}$) der Demodulatoreinrichtung (6) einen Phasenunterschied ($\Phi_1$) von 90° erzeugt, so daß $\omega_{ZFr} \cdot T = (n+1/2)\pi$ mit beliebigem ganzzahligen n ist.

FIG 1

FIG 2

FIG 3

FIG 4

$U_D$ STEHT FUER $U_A/U_{FRD}$  $\varphi_H$ STEHT FUER $\emptyset_1/\emptyset_2$
$\tau$ STEHT FUER $\tau_1/\tau_2$  $\omega$ STEHT FUER $\omega_{ZF}/2\omega_{ZF}$

FIG 5a

FIG 5b

# FIG 5

STAND DER
TECHNIK

MIT ERFINDUNG

VERLUST
[dB]

$|\Delta\varnothing / \pi - 1|$

ABWEICHUNG DES MODULATIONSHUBS VOM IDEALWERT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| A | JOURNAL OF LIGHTWAVE TECHNOLOGY. Bd. 8, Nr. 3 , März 1990 , NEW YORK US Seiten 309 - 322 CHIKAMA ET AL 'Modulation and demodulation techniques in optical heterodyne PSK transmission systems' * Seite 310, linke Spalte, Zeile 1 - Zeile 5 * * Seite 313, linke Spalte, Zeile 24 - Zeile 33 * * Seite 314, linke Spalte, Zeile 20 - rechte Spalte, Zeile 21 * * Abbildung 5 * --- | 1-5 | H04B10/14 |
| A | TECHNISCHE RUNDSCHAU Bd. 79, Nr. 43 , 23. Oktober 1987 , BERN CH Seiten 70 - 75 PETERMANN 'Kohärente optische Übertragungstechnik' * Seite 73, linke Spalte, Zeile 5 - Zeile 20 * * Seite 74, linke Spalte, Zeile 10 - Zeile 20 * * Abbildung 5 * --- | 1-5 | |
| A | OPTICAL FIBRE COMMUNICATION CONFERENCE Februar 1991 , SAN DIEGO US Seite 95 HILL ET AL 'Transmission of 4 Gbit/s on two microwave QPSK subcarriers over a coherent detection optical link' * Abbildung 2 * ----- | 1,2 | |

| RECHERCHIERTE SACHGEBIETE (Int.Cl.5) |
|---|
| H04B |

Der vorliegende Recherchenbericht wurde für alle Patentansprüche erstellt

| Recherchenort | Abschlußdatum der Recherche | Prüfer |
|---|---|---|
| DEN HAAG | 16. Dezember 1993 | Williams, M |